(19)

**Europäisches Patentamt**
**European Patent Office**
**Office européen des brevets**

(11)     **EP 1 285 830 B1**

(12)     **EUROPÄISCHE PATENTSCHRIFT**

(45) Veröffentlichungstag und Bekanntmachung des
Hinweises auf die Patenterteilung:
**09.04.2008 Patentblatt 2008/15**

(51) Int Cl.:
***B60S 1/08*** *(2006.01)*

(21) Anmeldenummer: **02016045.3**

(22) Anmeldetag: **19.07.2002**

(54) **Verfahren zur Kompensation des Temperatureinflusses auf die Sendeleitung einer Sende-LED und / oder die Empfindlichkeit einer Empfangsdiode**

Method for compensating the temperature influence on the sending capacity of a LED-transmitter and/or on the sensitivity of a receiver

Méthode pour compenser l'influence de la température sur la capacité d'émission d'un émetteur LED et/ou sur la sensibilité du récepteur

(84) Benannte Vertragsstaaten:
**DE ES FR GB IT SE**

(30) Priorität: **16.08.2001 DE 10140265**

(43) Veröffentlichungstag der Anmeldung:
**26.02.2003 Patentblatt 2003/09**

(73) Patentinhaber: **Hella KGaA Hueck & Co.**
**59552 Lippstadt (DE)**

(72) Erfinder: **Overmann, Peter**
**59557 Lippstadt (DE)**

(56) Entgegenhaltungen:
**EP-A- 0 292 957**          **EP-A- 0 748 891**
**EP-A- 1 044 858**          **WO-A-96/09667**
**DE-A- 3 314 770**          **US-B1- 6 175 205**

**Beschreibung**

Die Erfindung bezieht sich auf ein Verfahren zur Kompensation des Temperatureinflusses auf die Sendeleistung einer Sende-LED und/oder die Empfindlichkeit einer Empfangsdiode, die beide gemeinsam Teil einer optischen Messeinrichtung zur Detektion von Feuchtigkeit und/oder Verunreinigungen auf der Außenseite einer Scheibe sind. Eine derartige Einrichtung wird auch als Regen- bzw. Schmutzsensor bezeichnet und wird vorzugsweise bei Kraftfahrzeugen eingesetzt. Dabei wird der Regen-/Schmutzsensor an der Innenseite einer Fahrzeugscheibe, vorzugsweise hinter der Windschutzscheibe angeordnet. Die von der Sende-LED emittierte Strahlungsleistung wird dann entlang einer Übertragungsstrecke zwischen Sende-LED und Empfangsdiode zur Empfangsdiode geleitet, wobei die Windschutzscheibe Teil dieser Übertragungsstrecke ist. Die Anwesenheit von Flüssigkeit und/oder Verunreinigungen bewirkt nun eine Veränderung der zur Empfangsdiode übertragenen und dort gemessenen Strahlungsleistung. Diese Änderung im Signal der Empfangsdiode wird ausgenutzt, um Flüssigkeit und/oder Verunreinigungen zu detektieren. Dabei ist die Größe der Empfangssignaländerung in erster Näherung ein Maß für die Menge an Flüssigkeit bzw. Verunreinigungen. Mit Hilfe der optischen Messeinrichtung kann dann eine automatische Ansteuerung der Scheibenwisch- und/oder Waschanlage erfolgen.

Bei einem Regensensor wird die von der Sende-LED emittierte Strahlung so in die Scheibe eingekoppelt, daß die Strahlung unter einem Winkel zur Scheibennormalen verläuft, der gleich oder größer dem Winkel der Totalreflexion ist. Bei einer trockenen Scheibe wird daher - abgesehen von einer Absorption in der Scheibe - die gesamte von der Sende-LED ausgesandte Strahlung zur Empfangsdiode reflektiert. Die Anwesenheit von Flüssigkeit auf der Scheibenaußenseite führt dazu, daß die Bedingung der Totalreflexion nicht mehr gegeben ist. Ein Teil der von der Sende-LED emittierten Strahlung wird dann aus der Scheibe nach außen ausgekoppelt mit der Folge, daß weniger Strahlung zur Empfangsdiode gelangt.

Da die Sendeleistung einer LED temperaturabhängig ist, kann eine Temperaturzunahme den selben Effekt bewirken wie die Anwesenheit von Flüssigkeit auf der Scheibenaußenseite, da in beiden Fällen die von der Empfangsdiode gemessene Strahlung abnimmt. Außerdem kommt hinzu, daß die Empfindlichkeit der Empfangsdiode temperaturabhängig ist. Allerdings ist der Temperatureinfluß auf die Sendeleistung typischerweise größer als auf die Empfindlichkeit.

Zur Beseitigung dieses Problems wird in der DE 199 17 239 A1 der Umstand ausgenutzt, daß die Temperaturabhängigkeit der Sendeleistung einer LED aus dem Datenblatt bekannt ist oder zumindest durch Kalibrierungsmessungen bei verschiedenen Temperaturen ermittelt werden kann. Diese Abhängigkeit kann dann in Form einer Tabelle oder einer Kennlinie abgespeichert werden, wobei sich die Abhängigkeit in dem relevanten Temperaturbereich sehr gut durch einen linearen Zusammenhang zwischen der Sendeleistung und der Temperatur darstellen lässt. Wenn nun beim Einsatz des Regensensors die jeweilige Temperatur ermittelt wird, kann anhand der bekannten Temperaturabhängigkeit der störende Temperatureinfluß korrigiert werden.

Zur Temperaturbestimmung wird gemäß DE 199 17 239 A1 der Umstand ausgenutzt, daß von der LED-Temperatur nicht nur die Sendeleistung, sondern auch die Durchlassspannung der LED abhängt, so daß sich ein direkt erfassbarer funktioneller Zusammenhang zwischen Sendeleistung und Durchflussspannung bei einem bestimmten LED-Strom ergibt. Die Temperaturmessung erfolgt somit in einfacher und kostengünstiger Weise indirekt über eine Messung der Durchflussspannung der LED bei jeweils konstantem LED-Strom.

Auf diese Weise kann festgestellt werden, ob eine Änderung der in der Empfangsdiode gemessenen Strahlung auf die Anwesenheit von Feuchtigkeit zurückzuführen ist oder lediglich auf einer gestiegenen LED-Temperatur beruht.

Ein genauer Hinweis dazu, wie das Signal der Empfangsdiode, das als Meßgröße für die weitere Auswertung verwendet wird, zu korrigieren ist, um den störenden Temperatureinfluß auf die Sendeleistung der LED zu eliminieren, findet sich in der DE 199 17 239 A1 jedoch nicht.

Ein Korrekturansatz besteht darin, anhand der jeweils aktuellen Temperatur die Änderung der Sendeleistung über den bekannten linearen Zusammenhang zwischen LED-Sendeleistung und Temperatur zu ermitteln und diese temperaturabhängige Änderung als Offset zu dem in der Empfangsdiode gemessenen Wert zu addieren. Dies führt jedoch nur zu einer unvollständigen Kompensation der LED-Temperaturabhängigkeit. Anhand eines Fallbeispiels soll die Unzulänglichkeit dieses Korrekturansatzes kurz erläutert werden.

1.Fall (Regen ohne Temperaturänderung):

Angenommen die Sendeleistung der Sende-LED bei einer bestimmten Temperatur $T_R$ sei 100mWatt. Bei trockener Scheibe werden dann, wenn die Dämpfung in der Scheibe vernachlässigbar ist, 100mWatt zur Empfangsdiode übertragen. Bei einsetzendem Regen werden dann aufgrund von Feuchtigkeit auf der Scheibenaußenseite nur noch 95% der von der Sende-LED emittierten Strahlung zur Empfangsdiode reflektiert, da 5% aus der Scheibe über den Regentropfen ausgekoppelt werden. In der Empfangsdiode werden nur noch 95mWatt gemessen, d.h. es wird eine absolute Änderung von 5 mWatt registriert.

2. Fall (Regen mit Temperaturänderung):

Angenommen die Sendeleistung der Sende-LED bei einer bestimmten Temperatur $T_R$ sei wiederum 100m Watt. Nun kommt es aufgrund eines Temperaturanstiegs zu einer Abnahme der Sendeleistung auf beispielsweise 80m Watt. Aufgrund der bekannten Temperaturänderung und der bekannten Kennlinie wird dann ein Offset von 20m Watt berechnet, der auf das Empfangssignal addiert wird. Bei einsetzendem Regen wird dann nur noch 95% der von der Sende-LED emittierten Strahlung zur Empfangsdiode reflektiert. In der Empfangsdiode werden also nur noch 0,95 x 80m Watt = 76m Watt gemessen. Zur Kompensation des Temperatureinflusses wird dann der Offset von 20m Watt auf das Empfangssignal addiert. Das kompensierte Empfangssignal beträgt demnach 96m Watt. Damit wird eine Änderung im Vergleich zur trockenen Scheibe von 4m Watt registriert.

Ohne die vorstehend beschriebene Korrektur würde eine Empfangssignaländerung von 24m Watt registriert. Die Änderung aufgrund des Regens würde also ohne eine Korrektur völlig in der temperaturbedingten Änderung verschwinden. Der vorstehend beschriebene Korrekturansatz stellt somit zwar eine erhebliche Verbesserung dar, allerdings ist damit eine Überkompensation verbunden, die die Empfindlichkeit gegenüber regenbedingten Änderungen reduziert, da die regenbedingte Änderung im 2.Fall nur 4m Watt im Vergleich zu 5m Watt im 1.Fall betrug.

Ein weiteres gattungsgemäßes Verfahren ist im Dokument DE-A-3 314 770 beschrieben.

Aufgabe der Erfindung ist es, ein Verfahren zur Temperaturkompensation zu schaffen, das eine genaue Kompensation des Temperatureinflusses auf die Sendeleistung der Sende-LED und/oder die Empfindlichkeit der Empfangsdiode ermöglicht.

Die Lösung geht davon aus, daß die in der Empfangsdiode gemessene Strahlungsleistung ($E_{Gemessen}$) von folgenden Faktoren abhängt:

$$E_{Gemessen} = S \ x \ F \ x \ D \ x \ R.$$

Dabei bezeichnet

S: die Sendeleistung der Sende-LED,
F: einen Faktor, der die Temperaturabhängigkeit der Sende-LED erfasst,
D: einen Transmissionsfaktor der Scheibe und
R: einen Faktor angibt, wieviel der auf die Grenzfläche der Scheibenaußenseite treffenden Strahlung bei Regen und/oder Verunreinigungen zur Empfangsdiode reflektiert wird.

Um ein Empfangssignal zu erhalten, daß von der temperaturabhängigen Änderung der Sende-LED-Leistung unabhängig ist, wird folgender Ansatz gemacht:

$$E_{Komp.} = S \ x \ F \ x \ F^* \ x \ D \ x \ R.$$

Dabei bezeichnet F* einen Temperatur-Kompensationsfaktor. Das kompensierte Empfangssignal ist dann tatsächlich unabhängig von der Temperatur, wenn F* = 1/F. Der Temperatur-Kompensationsfaktor F* ist eine Funktion der jeweils aktuellen Temperatur:

$$F^* = F^* \ (T).$$

Das kompensierte Empfangssignal berechnet sich dann aus dem gemessenen Empfangssignal, indem dieses mit dem Temperatur-Kompensationsfaktor F* multipliziert wird:

$$E_{Komp.} = E_{Gemessen} \ x \ F^*.$$

Die jeweils aktuelle Temperatur wird vorzugsweise wie in der DE 199 17 239 A1 beschrieben indirekt über eine Messung der Durchlassspannung bei konstantem LED-Strom ermittelt. Es ist jedoch für die Anwendung des erfindungsgemäßen Verfahrens auch denkbar, einen separaten Temperatursensor einzusetzen.

Mit Hilfe des erfindungsgemäßen Verfahrens ist es im Unterschied zur Verwendung eines additiven Offsets erstmals möglich geworden, den Temperatureinfluß der Sende-LED einer gattungsgemäßen optischen Messrichtung vollständig zu kompensieren. Darüber hinaus wird auch die temperaturabhängige Empfindlichkeit der Empfangsdiode automatisch mit kompensiert.

Anhand des eingangs beschriebenen Fallbeispiels soll die Tauglichkeit des erfindungsgemäßen Verfahrens kurz beschrieben werden.

1.Fall (Regen ohne Temperaturänderung):

Angenommen die Sendeleistung der Sende-LED bei einer bestimmten Temperatur $T_R$ sei 100m Watt. Bei trockener Scheibe werden dann, wenn die Dämpfung in der Scheibe vernachlässigbar ist, 100m Watt zur Empfangsdiode übertragen. Bei einsetzendem Regen werden dann aufgrund von Feuchtigkeit nur noch 95% der von der Sende-LED emittierten Strahlung zur Empfangsdiode reflektiert, da 5% aus der Scheibe über den Regentropfen ausgekoppelt werden. In der Empfangsdiode werden nur noch 95m Watt gemessen, d.h. es wird eine absolute Änderung von 5m Watt registriert.

2. Fall (Regen mit Temperaturänderung):

Angenommen die Sendeleistung der Sende-LED bei einer bestimmten Temperatur $T_R$ sei wiederum 100m Watt. Nun kommt es aufgrund eines Temperaturanstiegs zu einer Abnahme der Sendeleistung auf beispielsweise 80m Watt. Aufgrund der bekannten Temperaturänderung wird dann ein Temperatur-Kompensationsfaktor F* von 5/4 (= 1,25) ermittelt. Wenn das gemessene Empfangssignal mit diesem Temperatur-Kompensationsfaktor F* multipliziert wird, ergibt das kompensierte Empfangssignal wieder die 100m Watt.

Bei einsetzendem Regen wird dann nur noch 95% der von der Sende-LED emittierten Strahlung zur Empfangsdiode reflektiert. In der Empfangsdiode werden also nur noch 0,95 x 80 m Watt = 76 m Watt gemessen. Zur Kompensation des Temperatureinflusses wird das gemessene Empfangssignal wiederum mit dem Temperatur-Kompensationsfaktor (F* = 1,25) multipliziert. Dies ergibt ein kompensiertes Empfangssignal von 95m Watt. Damit wird eine Änderung zur trockenen Scheibe von 5m Watt registriert. Damit sind die regenbedingten Änderungen in beiden Fällen - 1.Fall (keine Temperaturänderung) und 2. Fall (mit Temperaturänderung) - gleich.

Anhand der beigefügten Zeichnungen soll die Erfindung nachfolgend näher erläutert werden. Es zeigt:

Figur 1 eine schematische Darstellung der optischen Messeinrichtung bei trockener Scheibe,

Figur 2 eine schematische Darstellung der optischen Messeinrichtung bei mit Wasser benetzter Scheibe,

Figur 3 den linearen Zusammenhang zwischen dem gemessenen Empfangssignal und der Temperatur aufgrund der Temperaturabhängigkeit der Sende-LED,

Figur 4 eine Zuordnungstabelle für die Daten der Flussspannung, der Temperatur und des Temperatur-Kompensationsfaktors.

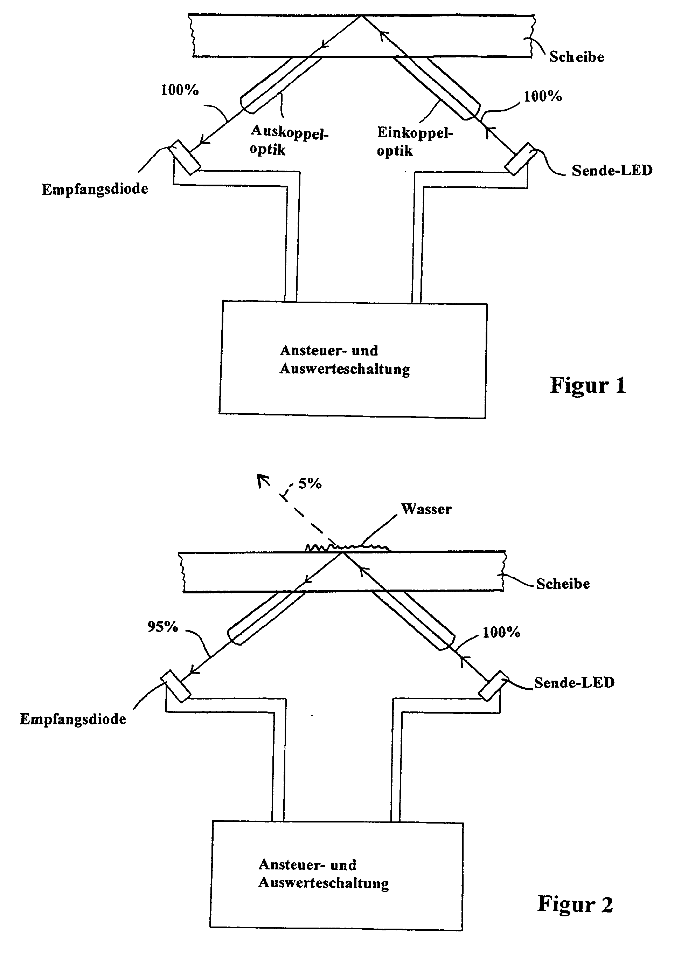

Figur 1 zeigt schematisch die optische Messeinrichtung zur Detektion von Flüssigkeit und/oder Verunreinigungen auf der Außenseite eine Fahrzeugscheibe. Die Einrichtung umfasst eine Sende-LED, deren Strahlung über eine Einkoppeloptik in die Scheibe unter einem Winkel gleich oder größer dem Winkel der Totalreflexion eingekoppelt wird. Die an der Grenzfläche der Scheibenaußenseite reflektierte Strahlung wird über eine Auskoppeloptik auf eine Empfangsdiode gerichtet. Bei einer trockenen Scheibe wird 100% der Sendeleistung, die in die Scheibe eingekoppelt wird, zur Empfangsdiode reflektiert. Dabei wird die Dämpfung der Strahlung in der Scheibe vernachlässigt.

Bei einer mit Flüssigkeit benetzten Scheibe wird je nach Benetzungsgrad ein gewisser Anteil der eingekoppelten Strahlungsleistung aus der Scheibe ausgekoppelt. Im dargestellten Beispiel (Figur 2) sind dies 5%. In diesem Fall werden nur noch 95% der eingekoppelten Sendeleistung zur Empfangsdiode reflektiert. Diese Abnahme des Empfangssignals wird zur Detektion der Benetzung und des Benetzungsgrades benutzt.

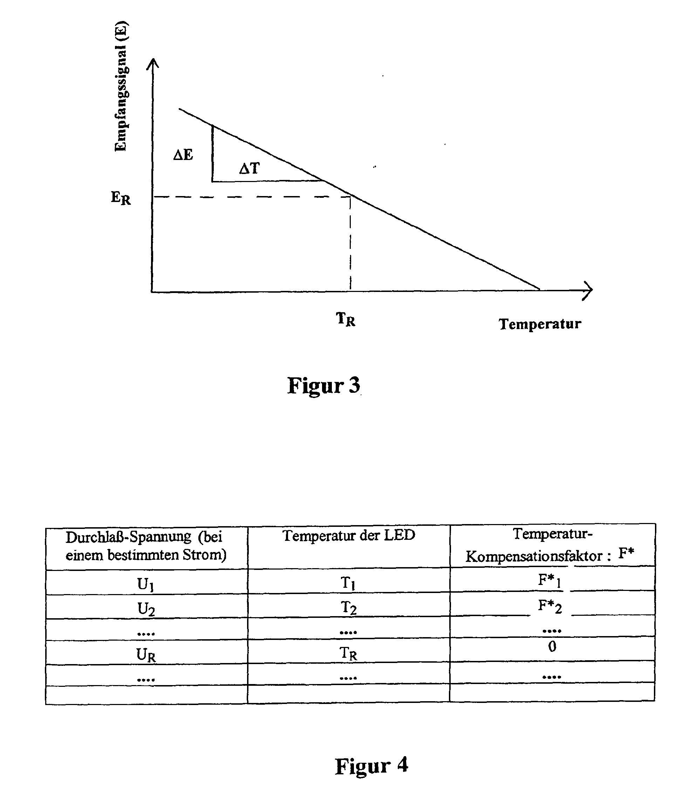

Figur 3 zeigt den linearen Zusammenhang zwischen dem Empfangssignal und der Temperatur, der durch eine Gerade mit negativer Steigung beschrieben wird. Die Abnahme des Empfangssignals mit steigender Temperatur ist bedingt durch die Temperaturabhängigkeit der Sendeleistung der Sende-LED. Die Geradengleichung kann wie folgt ausgedrückt werden:

$$E = (\Delta E/\Delta T) \times (T - T_R) + E_R$$

Dabei bezeichnet $(\Delta E/\Delta T)$ die Steigung der Geraden, $T$ die jeweils aktuelle Temperatur, $T_R$ eine Referenztemperatur und $E_R$ das Empfangssignal bei der Referenztemperatur.

Das Temperaturverhalten der Sendeleistung, das sich im Empfangssignal wiederspiegelt, wird durch das Verhältnis des aktuellen Empfangssignals $E$ zu dem Empfangssignal $E_R$ bei der Referenztemperatur bestimmt und durch den Faktor $F$ ausgedrückt:

$$F = (E/E_R)$$

Durch Einsetzten der Geradengleichung lässt sich der Faktor F wie folgt ausdrücken:

$$F = ((\Delta E/\Delta T)/E_R) \times (\Delta T_{akt}) + 1$$

mit: $\Delta T_{akt} = T - T_R$.

Wie vorstehend ausgeführt, gelingt die Kompensation nur dann vollständig, wenn der Temperatur-Kompensationsfaktor $F^*$ folgende Bedingung erfüllt:

$$F^* = 1/F.$$

Daraus folgt:

$$F^* = 1/(K \times \Delta T_{akt.} + 1)$$

mit: $K = (\Delta E/\Delta T)/E_R$

K ist eine temperaturunabhängige Konstante, die ein Maß für die Steigung der Kennlinie des temperaturabhängigen Empfangssignals bezogen auf einen Empfangssignal-Referenzwert darstellt.

In einer Ausführungsform ist in einer Ansteuer- und Auswerteschaltung der optischen Messeinrichtung, welche einen Mikroprozessor umfasst, ein Programm zur Berechnung des Temperatur-Kompensationsfaktors $F^*$ aus der jeweils aktuellen Temperaturdifferenz $\Delta T_{akt.}$ gespeichert. Die für die Berechnung benötigte Konstante K sowie die Referenztemperatur $T_R$ sind dort ebenfalls gespeichert. In diesem Fall wird der jeweilige Temperatur-Kompensationsfaktor $F^*$ jeweils aus der aktuellen Temperatur $T$ bzw. der aktuellen Temperaturdifferenz $\Delta T_{akt.}$ berechnet. Falls die Temperaturbestimmung indirekt über eine Messung der LED-Durchlaß-Spannung erfolgt, geht die jeweils aktuelle Durchlaß-Spannung bzw. die jeweils aktuelle Durchlaß-Spannungsdifferenz bezogen auf einen Durchlaß-Spannungsreferenzwert in die Berechnung ein. Dies ändert im Ergebnis nichts, da die Durchlaß-Spannung ja ein Maß für die Temperatur ist.

In einer alternativen Ausführungsform sind für die verschiedenen Temperaturen bzw. Durchlaß-Spannungen ($U_F$) in dem relevanten Temperaturbereich Temperatur-Kompensationsfaktoren $F^* = F^*(T)$ bzw. $F^* = F^*(U_F)$, welche zuvor in einer Kalibriermessung ermittelt wurden, in Form einer Zuordnungstabelle abgespeichert - siehe Figur 4.

In einer Ausführungsform wird die Konstante K in einer Kalibriermessung vor dem eigentlichen Einsatz der optischen Messeinrichtung bestimmt und dann zusammen mit der Referenztemperatur abgespeichert.

In einer besonders vorteilhaften Ausführungsform wird nur ein Startwert $K_S$ für die Konstante $K$ und eine Referenztemperatur abgespeichert. Die Ansteuer- und Auswerteschaltung ist dann in der Lage, die Konstante $K$ zu ändern. Auf diese Weise ist es möglich, die Konstante $K$ nachzuführen (Nachjustage) oder überhaupt erst auf den für eine Temperaturkompensation optimalen Wert einzustellen. Damit kann auf die aufwendige werksseitige Kalibriermessung vor Auslieferung der optischen Messeinrichtung, welche mit jeder Messeinrichtung oder chargenweise durchzuführen wäre, verzichtet werden. Stattdessen reicht es aus, einen einmal ermittelten Wert für die Konstante K als Startwert $K_S$ für alle optischen Messeinrichtungen abzuspeichern. Der für die Temperaturkompensation der jeweiligen optischen Messeinrichtung optimale Wert wird dann in der Messeinrichtung iterativ selbst bestimmt und nachgeführt. Je nachdem, welches Iterationsverfahren verwendet wird, wird die optimale Konstante K schnell gefunden, so daß die anfängliche "Fehleinstellung" der optischen Messeinrichtung nur von kurzer Dauer ist. Je nach Güte des Iterationsverfahrens ist es sogar möglich, irgendeinen beliebigen Startwert für die Konstante K zu verwenden.

Zum nachträglichen Ändern der Konstanten K wird das kompensierte Empfangsignal fortlaufend oder in bestimmten Abständen überprüft. Bei langsamen Änderungen des kompensierten Empfangssignals, wird die Konstante $K$ solange iterativ erhöht bzw. erniedrigt bis sich ein gleichbleibender Wert für das kompensierte Empfangssignal einstellt.

Änderungen eines nur unzureichend kompensierten Empfangssignals bei einer Temperaturdrift sind im Vergleich zu Änderungen bei einsetzendem Regen typischerweise wesentlich langsamer.

Beispielsweise ist es bei einem Regensensor, der eine Scheibenwischanlage steuert, vorgesehen, den Wert des kompensierten Empfangssignals, der jeweils nach einem Überwischvorgang ermittelt wird, als Sollwert für eine trockene Scheibe nachzuführen. Erneut einsetzender Regen oder Dauerregen bewirkt dann eine große Abweichung des kompensierten Empfangssignals vom jeweiligen Sollwert in relativ kurzen Zeit, auf die dann mit einem Überwischvorgang reagiert wird.

Die Zeitintervalle, in denen die Überprüfung einer Nachjustage der Konstanten $K$ erfolgt, liegen vorzugsweise im Minutenbereich. Damit wird sichergestellt, daß schnelle Änderungen, die durch Regen bedingt sind, nicht zu einer fehlerhaften Nachjustage führen.

Es ist jedoch auch vorgesehen, die Nachjustage-Intervalle in Zeitabständen kleiner als eine Minute durchzuführen. Allerdings ist dann die Größe der Änderung der Konstanten $K$ bei jedem Iterationsschritt kleiner.

Allgemein ist die Größe der Änderung der Konstanten $K$ pro Iterationsschritt bei der Nachjustage abhängig von der Länge des Nachjustage-Intervalls, wobei die Änderung pro Iterationsschritt umso größer ist je länger das Nachjustage-Intervall ist.

Die Länge des Zeitintervalls, in dem die Überprüfung einer Nachjustage erfolgt, kann auch abhängig von bestimmten Zuständen variieren. Bei einer automatischen Scheibenwischanlage mit Regensensor gibt es zum Beispiel die Schaltzustände: Aus, Intervall, Stufe I und Stufe II.

Im Schaltzustand "Intervall" wird die Scheibenwischanlage automatisch vom Regensensor gesteuert. Wenn vom Regensensor eine Benetzung der Scheibe detektiert wird, wird automatisch ein Wischzyklus ausgelöst. Dabei hängt die Geschwindigkeit oder die Intervallzeit, mit der gewischt wird, vom Benetzungsgrad ab.

In den Stufen I und II erfolgt ein Dauerwischen, wobei die Wischgeschwindigkeit in Stufe II höher ist als in Stufe I.

Im Schaltzustand "Aus" ist die Ansteuerung der Scheibenwischanlage durch den Regensensor abgeschaltet. Der Regensensor selbst kann jedoch sehr wohl aktiv sein.

Dabei ist das Nachjustage-Intervall im Schaltzustand "Aus" länger als im Schaltzustand "Intervall", da im Schaltzustand "Intervall" im Fall von Regen nach dem Überwischen wieder ein Sollwert für eine trockene Scheibe generiert wird, so daß der Einfluß des Regens, der bei der Nachjustage keine Rolle spielen soll, eliminiert wird. Im Schaltzustand "Aus" wird nach einer Benetzung mit Wasser kein neuer Sollwert für eine trockene Scheibe erzeugt. Um im diesem Fall den Einfluß der mit benetzten Scheibe auf die Nachjustage möglichst gering zu halten, wird das Nachjustage-Intervall entsprechend lang gewählt oder die Änderung pro Iterationsschritt entsprechend gering gewählt

Im sogenannten Stand-By-Betrieb, zum Beispiel bei abgeschaltetem Fahrzeug, wird das Nachjustage-Intervall besonders lang oder die Änderung pro Iterationsschritt besonders klein gewählt

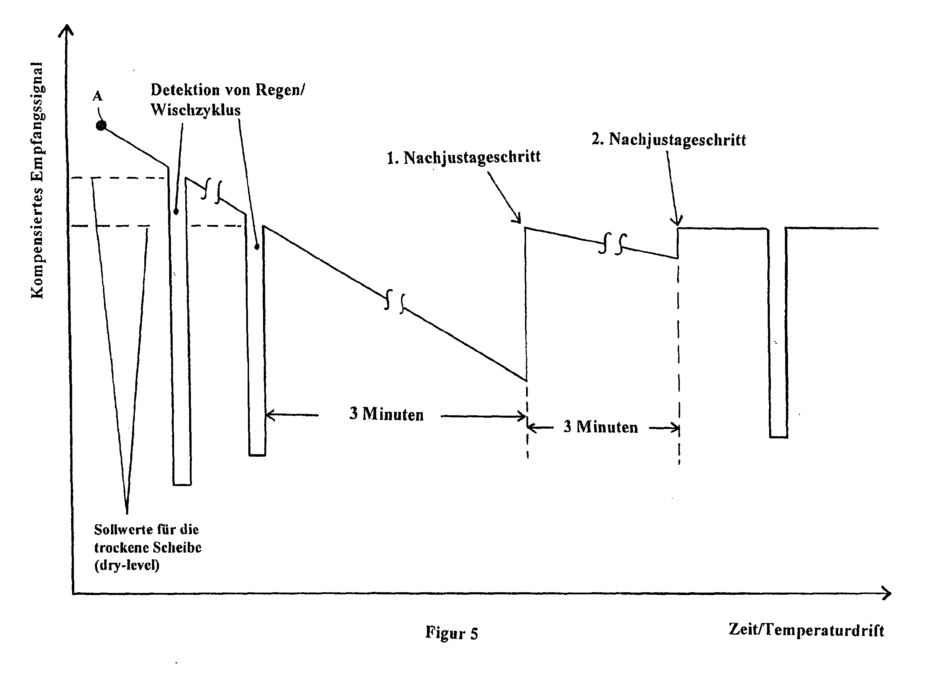

Die Nachjustage der Temperatur-Kompensationsfaktor-Konstanten **K** soll anhand von Figur 5 veranschaulicht werden.

In Figur 5 ist dargestellt wie sich das kompensierte Empfangssignal im Laufe der Zeit verhält, wenn eine Temperaturdrift der Sende-LED vorliegt und die Kompensation anfangs unzulänglich war, d.h. die Konstante K einen nicht optimalen Wert aufwies. Die Scheibenwischanlage befindet sich in der Stellung "Intervall". Das kompensierte Empfangssignal im Punkt A ist gleichzeitig der Sollwert für die trockene Scheibe nach einem letzten im Diagramm nicht mehr dargestellten Überwischvorgang. Aufgrund der Temperaturdrift nimmt das kompensierte Empfangssignal langsam ab. Allerdings ist die Abnahme vom Sollwert in Punkt A noch nicht so groß, das eine Schwelle für die Detektion von Regen unterschritten werden würde. Bei einsetzendem Regen nimmt das kompensierte Empfangssignal dann relativ schnell ab, so daß eine Abnahmeschwelle im Vergleich zum Sollwert für die trockene Scheibe unterschritten wird. Dies führt dazu, daß ein Wischzyklus ausgelöst wird, wobei das kompensierte Empfangssignal nach dem Wischzyklus dann als neuer Sollwert für die trockene Scheibe genommen wird. Die zeitlichen Abstände zwischen den Wischzyklen hängen von der Regensituation ab. Ein 1.Nachjustageschritt erfolgt beispielsweise 3 Minuten nach dem letzten Überwischvorgang, da eine langsame Abnahme des kompensierten Empfangssignals ohne eine Benetzung der Scheibe festgestellt wurde. In diesem Nachjustageschritt wurde die Konstante **K** des Temperatur-Kompensationsfaktors **F\*** geändert mit dem Ziel, die Temperaturdrift zu minimieren. Das geänderte kompensierte Empfangssignal ist dann auch der neue Sollwert für die trockene Scheibe (dry-level). Nach diesem Nachjustageschritt ist die Abnahme des kompensierten Empfangssignals mit der Zeit geringer, aber immer noch nicht vollständig kompensiert. Dies gelingt erst nach einem 2. Nachjustageschritt. In der Praxis erfolgt die Nachjustage iterativ in mehreren Schritten. Selbstverständlich kann eine Nachjustage auch bereits in nur einem Schritt erfolgen.

Falls die Temperaturabhängigkeit der Sendeleistung und/oder der Empfindlichkeit in unterschiedlichen Temperaturbereichen besser durch unterschiedliche lineare Kennlinien beschrieben wird, ist es vorgesehen, für unterschiedliche Temperaturbereiche unterschiedliche Konstanten **K** für den Temperatur-Kompensationsfaktor zu verwenden.

Erfahrungen haben gezeigt, daß das Temperaturverhalten eine gewisse Zeit nach dem Einschalten und dem Ausschalten der optischen Messeinrichtung (z.B. beim Starten und Abschalten des Fahrzeugs) von der sonstigen Temperaturdrift während des Betriebs oder im Stand-By-Modus verschieden ist. Dabei ist insbesondere die Temperaturverteilung innerhalb der optischen Messeinrichtung in diesen Zeiten noch recht inhomogen. Deshalb ist es in einer vorteilhaften Ausführungsform vorgesehen, während dieser Einschalt- und/ oder Ausschaltphase unterschiedliche Konstanten **K** für den Temperatur-Kompensationsfaktor zu verwenden.

Außerdem werden die Nachjustage-Intervalle sowie die Änderungen pro Iterationsschritt während Einschalt- und/oder Ausschaltphase besonders gewählt.

**Patentansprüche**

**1.** Verfahren zur Kompensation des Temperatureinflusses auf die Sendeleistung einer Sende-LED und/ oder die Empfindlichkeit einer Empfangsdiode, die beide Teil einer optischen Messeinrichtung zur Detektion von Feuchtigkeit und/oder Verunreinigungen auf der Außenseite einer Scheibe sind, wobei .

- die von der Sende-LED emittierte Strahlungsleistung entlang einer Übertragungsstrecke zwischen Sende-LED und Empfangsdiode zur Empfangsdiode geleitet wird,
- die Anwesenheit von Feuchtigkeit und/oder Verunreinigungen eine Veränderung der zur Empfangsdiode übertragenen Strahlungsleistung bewirkt, wobei die in der Empfangsdiode gemessene Strahlungsleistung (E) als Messgröße für die Detektion von Feuchtigkeit oder Verunreinigungen dient,
- die Abhängigkeit der gemessenen Strahlungsleistung (E) zumindest in einem Temperaturbereich zumindest näherungsweise linear von der Temperatur abhängt,
- die Temperatur der Sende-LED und/oder der Empfangsdiode ermittelt wird,
- anhand der jeweils ermittelten Temperatur und der bekannten Temperaturabhängigkeit die in der Empfangsdiode gemessene Strahlungsleistung (E) korrigiert wird,

**dadurch gekennzeichnet, daß**
die in der Empfangsdiode gemessene Strahlungsleistung (E) zur Kompensation des Temperatureinflusses lediglich mit einem Temperatur-Kompensationsfaktor (F\*) multipliziert wird, in dessen Bestimmung die jeweils aktuelle Temperatur eingeht.

**2.** Verfahren nach Anspruch 1,
**dadurch gekennzeichnet, daß**
der Temperatur-Kompensationsfaktor (F\*) sich wie folgt berechnet:

$$F^* = 1/(K \times \Delta T_{akt.} + 1),$$

wobei

K eine temperaturunabhängige Konstante und $\Delta T_{akt}$ die aktuelle Temperaturdifferenz zwi-

schen der jeweils aktuellen Temperatur und einer Referenztemperatur ($T_R$) ist.

3. Verfahren nach Anspruch 2,
**dadurch gekennzeichnet, daß**
die temperaturunabhängige Konstante (K) ein Maß für die Steigung ($\Delta E/\Delta T$) der Kennlinie des temperaturabhängigen Empfangssignals bezogen auf einen Empfangssignal-Referenzwert ($E_R$) ist, wobei gilt:

$$K = (\Delta E/\Delta T)/E_R \; .$$

4. Verfahren nach Anspruch 2 oder 3,
**dadurch gekennzeichnet, daß**
der jeweilige Temperatur-Kompensationsfaktor (F*) in einer der optischen Messeinrichtung zugeordneten Ansteuer- und Auswerteschaltung mittels eines Mikroprozessors anhand der jeweils aktuellen Temperatur über ein Programm berechnet wird.

5. Verfahren nach Anspruch 2 oder 3,
**dadurch gekennzeichnet, daß**
in einem bestimmten Temperaturbereich zu jeder Temperatur ein Temperatur-Kompensationsfaktor (F*) in Form einer Tabelle gespeichert ist, wobei der jeweilige Temperatur-Kompensationsfaktor aus der Tabelle entnommen wird.

6. Verfahren nach einem der Ansprüche 2 bis 5,
**dadurch gekennzeichnet, daß**
bei einer Änderung des kompensierten Empfangssignals, die im Vergleich zu einer regen- oder schmutzbedingten Änderung langsam ist, eine, vorzugsweise iterative, Anpassung der Konstanten (*K*) derart erfolgt, daß das kompensierte Empfangssignal bei trockener und/oder sauberer Scheibe konstant bleibt.

7. Verfahren nach Anspruch 6,
**dadurch gekennzeichnet, daß**
die Länge der Nachjustage-Intervalle abhängig ist von Größe der Änderung der Konstante(K) pro Iterationsschritt oder umgekehrt, wobei die Änderung pro Iterationsschritt umso größer ist je länger das Nachjustage-Intervall ist.

8. Verfahren nach Anspruch 6 oder 7,
wobei

- die optische Messeinrichtung zur automatischen Ansteuerung einer Scheibenwischanlage verwendet wird,
- im Schaltzustand "Intervall" automatisch ein Wischzyklus ausgelöst. wird, wenn von der optischen Einrichtung eine Benetzung der Scheibe detektiert wird,
- im Schaltzustand "Aus" die Ansteuerung der Scheibenwischanlage durch den Regensensor abgeschaltet ist, während die optische Meßeinrichtung jedoch aktiv ist,

**dadurch gekennzeichnet, daß**
das Nachjustage-Intervall im Schaltzustand "Aus" länger ist als im Schaltzustand "Intervall" oder die Änderung der Konstanten (**K**) pro Iterationsschritt im Schaltzustand "Aus" geringer ist als im Schaltzustand "Intervall".

9. Verfahren nach Anspruch 8,
**dadurch gekennzeichnet, daß**
das Nachjustage-Intervall im Stand-By-Modus am längsten ist oder die Änderung der Konstanten (**K**) pro Iterationsschritt am geringsten ist.

10. Verfahren nach einem der Ansprüche 2 bis 9,
**dadurch gekennzeichnet, daß**
für unterschiedliche Temperaturbereiche unterschiedliche Konstanten (**K**) für den Temperatur-Kompensationsfaktor (F*) verwendet werden.

11. Verfahren nach einem der Ansprüche 2 bis 10,
**dadurch gekennzeichnet, daß**
während der Einschalt- und/oder Ausschaltphase der optischen Messeinrichtung unterschiedliche Konstanten (**K**) für den Temperatur-Kompensationsfaktor (F*) verwendet werden.

**Claims**

1. Method of correcting the influence that the temperature has on the transmitting power of a transmitter LED and/or the responsiveness of a receiving diode, both of which are components of an optical measuring installation for detecting the humidity and/or impurities on the outer surface of a pane of glass, wherein

- the radiation power emitted by the transmitter LED travels to the receiving diode along a transfer line connecting the transmitter LED with the receiving diode;
- the presence of humidity and/or impurities will modify the radiation power transferred to the receiving diode where the radiation power (E) measured by the receiving diode is the variable used to detect humidity and/or impurities;
- at least within a certain temperature range, the measured radiation power (E) approximately linearly depends on the temperature;
- the temperature of the transmitter LED and/or receiving diode is measured;
- the temperature measured and the known temperature dependency are used to correct the radiation power (E) measured in the receiving diode;

**characterized in that** the radiation power (E) measured in the receiving diode to correct the influence of the temperature is simply multiplied by a temperature correction factor (F*) which takes the current temperature as one of its determining elements.

2. Method of claim 1, **characterized in that** the temperature correction factor (F*) computes as follows:

$$F^* = 1/(C \times \Delta T_{cur.} + 1),$$

where

C is a constant value not influenced by the temperature, and
$\Delta T_{cur.}$ is the current difference in temperatures between the current temperature and a reference temperature $(T_R)$.

3. Method of claim 2,
**characterized in that**
the thermally independent constant (C) is a determining factor for the angle of upward slope $(\Delta E/\Delta T)$ of the characteristic of the thermally dependent receiver signal in relation to a set receiver reference signal $(E_R)$, assuming that:

$$C = (\Delta E/\Delta T)/E_R$$

4. Method of claim 2 or 3,
**characterized in that**
a microprocessor in a control and analysis circuit allocated to the optical measuring instrument runs a program using the current temperature to compute the applicable temperature correction factor (F*).

5. Method of claim 2 or 3,
**characterized in that**
a table of temperature correction factors (F*) for every temperature in a specified temperature range is stored to provide a source for retrieving the appropriate temperature correction factor.

6. Method of claims 2 to 5,
**characterized by**
a change in the corrected receiver signal being slow compared with a change
caused by rain or dirt will provoke a preferably iterative adaptation of the constant (C) such that the corrected receiver signal remains constant if the pane of glass is dry and/or clean.

7. Method of claim 6,
**characterized in that**
the duration of readjustment intervals depends on the amount by which the constant (C) changes at every iterative step or vice versa, where the amount of change per iterative step increases with the duration of the readjustment interval.

8. Method of claim 6 or 7,
wherein

- the optical measuring installation is used to automatically actuate a windscreen wiper system;
- a logical "interval" state automatically starts a wiper cycle if the optical installation detects that the window pane is wet;
- a logical "off" state turns off the actuation of the windscreen wiper system by the rain sensor, whereas the optical measuring installation remains active,

**characterized in that**
the readjustment interval is longer in the "off" state than in the "interval" state or that the amount by which the constant (C) changes per iterative step is less in the "off" state than in the "interval" state.

9. Method of claim 8,
**characterized in that**
the readjustment interval is longest in standby mode or that the constant (C) changes least per iterative step.

10. Method of claims 2 to 9,
**characterized in that**
different temperature ranges use different constants (C) for the temperature correction factor (F*).

11. Method of claims 2 to 10,
**characterized in that**
the turn-on and/or turn-off stages of the optical measuring installation use different constants (C) for the temperature correction factor (F*).

**Revendications**

1. Procédé de compensation de l'influence de la température sur la puissance d'émission d'une diode d'émission et/ou la sensibilité d'une diode de réception, qui font les deux partie intégrante d'un dispositif de mesure optique permettant la détection d'humidité et/ou d'impuretés sur la face extérieure d'une vitre, dans lequel

- la puissance de rayonnement émise par la diode d'émission est transmise à la diode de réception le long d'une ligne de transmission entre la diode d'émission et la diode de réception,

- la présence d'humidité et/ou d'impuretés produit une modification de la puissance de rayonnement transmise à la diode de réception, la puissance de rayonnement (E) mesurée dans la diode de réception servant de grandeur de mesure pour la détection d'humidité ou d'impuretés,

- au moins dans une plage de températures, la puissance de rayonnement mesurée (E) est fonction de la température, et ce de façon au moins approximativement linéaire,

- la température de la diode d'émission et/ou de la diode de réception est déterminée,

- à l'aide de la température déterminée et de l'influence connue de la température, la puissance de rayonnement (E) mesurée dans la diode de réception est corrigée,

**caractérisé en ce que**

la puissance de rayonnement (E) mesurée dans la diode de réception et permettant la compensation de l'influence de la température est simplement multipliée par un facteur de compensation de température (F*) dans la composition duquel la température existante correspondante est incluse.

2.  Procédé selon la revendication 1,
    **caractérisé en ce que**
    le facteur de compensation de température (F*) est calculé comme suit :

$$F^* = 1/(K \times \Delta T_{act.} + 1),$$

où

K est une constante indépendante de la température et
$\Delta T_{act.}$ est la différence de température existante entre la température existante et une température de référence ($T_R$).

3.  Procédé selon la revendication 2,
    **caractérisé en ce que**
    la constante indépendante de la température (K) est un indicateur de la pente ($\Delta E/\Delta T$) de la courbe caractéristique du signal de réception dépendant de la température par rapport à une valeur de référence du signal de réception ($E_R$), où

$$K = (\Delta E/\Delta T)/E_R$$

4.  Procédé selon la revendication 2 ou 3,
    **caractérisé en ce que**
    le facteur de compensation de température (F*) est calculé dans un circuit de commande et d'analyse affecté au dispositif de mesure, via un programme, à l'aide d'un microprocesseur et d'après la température existante.

5.  Procédé selon la revendication 2 ou 3,
    **caractérisé en ce que**
    dans une certaine plage de températures, un facteur de compensation de température (F*) est enregistré pour chaque température sous la forme d'un tableau, le facteur de compensation de température concerné étant prélevé dans le tableau.

6.  Procédé selon l'une des revendications 2 à 5,
    **caractérisé en ce que**
    dans le cas d'une modification du signal de réception compensé, qui est lente par comparaison à une modification liée à la pluie ou à l'encrassement, une adaptation - de préférence itérative - de la constante (K) s'effectue de telle façon que le signal de réception compensé reste constant lorsque la vitre est sèche et/ou propre.

7.  Procédé selon la revendication 6,
    **caractérisé en ce que**
    la longueur des intervalles de réajustement dépend de la grandeur de la modification de la constante (K) par étape d'itération ou inversement, plus la modification par étape d'itération étant grande, plus l'intervalle de réajustement étant long.

8.  Procédé selon la revendication 6 ou 7,
    dans lequel

    - le dispositif de mesure optique est utilisé pour la commande automatique d'un système d'essuie-glace,
    - dans l'état de commutation "Intervalle", un cycle d'essuyage est automatiquement déclenché lorsqu'un mouillage de la vitre est détecté par le dispositif optique,
    - dans l'état de commutation "OFF", la commande du système d'essuie-glace est coupée par le capteur de pluie, le dispositif de mesure optique restant néanmoins actif,

    **caractérisé en ce que**
    l'intervalle de réajustement est plus long dans l'état de commutation "OFF" que dans l'état de commutation "Intervalle" ou la modification de la constante (K) par étape d'itération est plus petite dans l'état de commutation "OFF" que dans l'état de commutation "Intervalle".

9.  Procédé selon la revendication 8,

**caractérisé en ce que**,
l'intervalle de réajustement est le plus long en mode Stand-by ou la modification de la constante (K) par étape d'itération est la plus petite.

10. Procédé selon l'une des revendications 2 à 9, **caractérisé en ce que**,
pour différentes plages de températures, différentes constantes (K) sont utilisées pour le facteur de compensation de température (F*).

11. Procédé selon l'une des revendications 2 à 10, **caractérisé en ce que**,
pendant la phase d'activation et/ou de désactivation du dispositif de mesure optique, différentes constantes (K) sont utilisées pour le facteur de compensation de température (F*).

Scheibe

100%

100%

Auskoppeloptik

Einkoppeloptik

Empfangsdiode

Sende-LED

Ansteuer- und
Auswerteschaltung

**Figur 1**

5%

Wasser

Scheibe

95%

100%

Empfangsdiode

Sende-LED

Ansteuer- und
Auswerteschaltung

**Figur 2**

**Figur 3**

| Durchlaß-Spannung (bei einem bestimmten Strom) | Temperatur der LED | Temperatur-Kompensationsfaktor : $F^*$ |
|---|---|---|
| $U_1$ | $T_1$ | $F^*_1$ |
| $U_2$ | $T_2$ | $F^*_2$ |
| .... | .... | .... |
| $U_R$ | $T_R$ | $0$ |
| .... | .... | .... |
| | | |

**Figur 4**

2. Nachjustageschritt

1. Nachjustageschritt

Detektion von Regen/
Wischzyklus

Kompensiertes Empfangssignal

Sollwerte für die
trockene Scheibe
(dry-level)

3 Minuten

3 Minuten

Zeit/Temperaturdrift

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19917239 A1

- DE 3314770 A